Europäisches Patentamt

European Patent Office

Office européen des brevets

(11) Numéro de publication: **0 325 868**
**A1**

## (12) DEMANDE DE BREVET EUROPEEN

(21) Numéro de dépôt: **88400191.8**

(22) Date de dépôt: **28.01.88**

(51) Int. Cl.⁴: **F03D 9/00 , B01D 50/00 , B01D 45/00**

(43) Date de publication de la demande:
**02.08.89 Bulletin 89/31**

(84) Etats contractants désignés:
**CH DE GB IT LI**

(71) Demandeur: **Gauchard, Fernand**
**8 rue du Grand Noyer**
**F-77170 Brie Comte Robert(FR)**

(72) Inventeur: **Gauchard, Fernand**
**8 rue du Grand Noyer**
**F-77170 Brie Comte Robert(FR)**

(74) Mandataire: **Dawidowicz, Armand Cabinet**
**Lemonnier-Dawidowicz**
**4, Boulevard Saint Denis**
**F-75010 Paris(FR)**

(54) **Capteur de poussières.**

㊛ La présente invention concerne un capteur de poussières comportant un circuit de circulation pour le flux d'air à débarrasser des poussières et particules.

Conformément à l'invention le flux d'air circule au contact d'au moins une paroi fixe (16-19) ou mobile (12) imprégnée par capillarité ou trempage avec un liquide mouillant et de préférence neutralisant ou bactéricide, la paroi mobile étant de préférence sous forme d'une bande sans fin verticale (12) dont la boucle inférieure plonge dans la masse de liquide (13) pour assurer le lavage de la bande et l'élimination des particules et substances déposées sur sa surface.

L'invention a pour but de fixer des poussières fines en suspension dans l'atmosphère telles que des poussières radio-actives, des poussières chimiques ou des bactéries.

Fig. 2

# Capteur de poussières.

La présente invention a pour but de réaliser un capteur de poussières susceptible de fonctionner au sol ou en altitude pour attirer, fixer et éventuellement neutraliser des poussières fines en suspension dans l'atmosphère telles que les poussières radio-actives émises lors d'un accident dans une centrale nucléaire ou les poussières ou bactéries dispersées lors d'une agression nucléaire, chimique ou bactérienne en cas de conflit ainsi que toutes les poussières et pollutions industrielles. Un tel capteur de poussières a pour but essentiel d'éviter que de telles poussières ne soient inhalées par l'homme ou l'animal ou ne polluent la végétation.

Le dispositif capteur comporte essentiellement un circuit de circulation dans lequel le flux d'air à débarrasser des poussières et particules circule au contact d'au moins une paroi fixe ou mobile imprégnée par capillarité ou trempage avec un liquide mouillant et de préférence neutralisant ou bactéricide. La paroi lorsqu'elle est mobile est de préférence sous forme d'une bande sans fin verticale dont la boucle inférieure plonge dans la masse de liquide pour assurer le lavage de la bande et l'élimination des particules et substances déposées sur sa surface.

Dans le dispositif capteur le flux d'air à débarrasser des poussières et particules circule en étant soumis à au moins un et de préférence plusieurs changements de direction assurant des accélérations centrifuges de manière à précipiter les éléments les plus denses du flux vers la paroi imprégnée de liquide mouillant.

Les changements de direction assurant des accélérations centrifuges tendant à précipiter les éléments les plus denses du flux vers la paroi assurant leur fixation peuvent être assurés par des chicanes, un canal en spirale ou hélicoïdal, par un cyclone ou par des bombements de la paroi venant en saillie dans la section du canal de circulation du flux. Ladite paroi peut présenter un ensemble d'éléments en relief tels que notamment des poils ou tétons en quinconce accroissant la surface de contact ou des reliefs tels que des nervures, gorges et poches superficielles assurant un freinage de la couche laminaire au contact et des turbulences et zones de calme favorisant la venue des poussières et corpuscules au contact de la face mouillée de la paroi,

Le dispositif capteur est constitué de préférence par un caisson en métal léger ou matière plastique comportant au moins un orifice d'entrée d'air, un dispositif d'aspiration et de propulsion de l'air, un circuit de canalisation du flux d'air et dans dispositifs de captage des poussières disposés le long de ce circuit de canalisation, ces dispositifs de captage étant du type décrit ci-dessus.

Selon une autre caractéristique pour utiliser de façon directe l'énergie éolienne du vent qui assure elle-même la dispersion et l'entraînement des poussières ou corpuscules à capter depuis leur point de production ou d'émission, le dispositif capteur de poussières ou au moins ses ouïes d'admission de l'air dans la gaine conduisant au circuit du capteur, sont auto-orientables dans le lit du vent soit par action du vent sur une dérive faisant tourner le dispositif autour d'un pivot ou de son moyen de suspension, soit par contrôle de l'alimentation d'un moteur d'orientation par un dispositif détecteur de la direction du vent ou analogue.

Selon une autre caractéristique, le dispositif pour le captage des poussières en altitude est suspendu à un ballon du type libre, dirigeable ou captif. Dans le cas d'un ballon captif celui-ci est relié de façon connue à un treuil qui peut être monté sur un véhicule à même de suivre le déplacement d'un nuage suspect. Le dispositif peut également être largué en altitude par un aérenof ou une fusée pour descendre à travers le nuage à explorer en étant freiné par un parachute. Dans ce dernier cas, la vitesse de chute peut être utilisée comme source génératrice de l'énergie éolienne, le dispositif capteur aspirant l'air à analyser par apiration in directe à sa périphérie et/ou par refoulement direct à travers des entrées d'air prévues sur sa surface inférieure. Dans le cas où le dispositif est propulsé à travers le nuage à analyser par ballon dirigeable, aéronef ou fusée, l'air peut être aspiré et l'énergie éolienne fournie par la vitesse relative du porteur-propulseur par rapport à l'atmosphère traversée.

L'invention sera mieux comprise à la lecture de la description détaillée d'un mode de réalisation d'un capteur conforme à l'invention faite ci-après avec référence aux dessins ci-annexés dans lesquels :

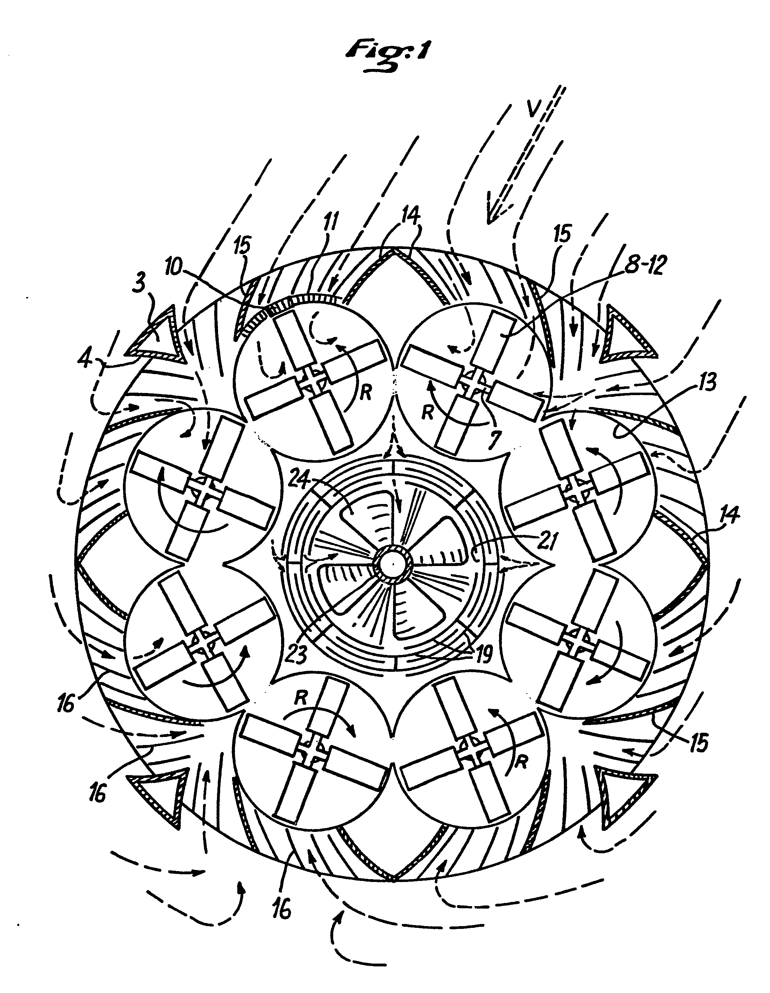

Figure 1 est une vue en coupe schématique par I-I de figure 2 d'un capteur de poussières;

Figure 2 est une vue en coupe schématique axiale de celui-ci et

Figure 3 est une vue en perspective schématique d'un moulinet rentrant dans la constitution du capteur.

Le capteur illustré à titre d'exemple est un capteur destiné à être largué en altitude en étant suspendu à un parachute de façon à traverser le nuage suspect. On utilise dans ce mode de réalisation à fois l'énergie éolienne de direction horizontale et l'énergie du vent relatif résultant de la vitesse de descente de l'engin. Il est bien évident que ce capteur pourrait être modifié facilement pour utiliser seulement l'énergie éolienne horizontale naturelle ou créée par le déplacement du vecteur, par exemple lorsqu'il est suspendu à un vecteur tel qu'un ballon captif, ballon libre ou ballon dirigeable ou autre ou l'énergie éolienne naturelle lorsqu'il est fixe, par exemple monté au sommet d'un édifice qu'il est destiné à alimenter en air épuré.

De même le capteur représenté est de forme symétrique autour d'un axe vertical et en fait de révolution pour que son fonctionnement soit indépendant de la direction relative du vent mais il pourrait aussi bien être de forme linéaire, par exemple en parallélipipède allongé lorsqu'il peut être orienté dans le lit du vent, soit automatiquement par exemple en étant suspendu sous le ballon captif selon l'axe de celui-ci, soit parce qu'il est monté à rotation autour d'un axe vertical et orienté par une gouverne à action directe ou assistée par un moteur.

Le capteur représenté est formé par un caisson cylindrique comportant un plateau supérieur 1 est un plateau inférieur 2 réunis par des piliers 3 de section sensiblement triangulaire avec la face extérieure cylindrique et les faces radiales 4 concaves pour dévier les filets d'air s'écoulant à la périphérie du caisson vers l'intérieur de celui-ci.

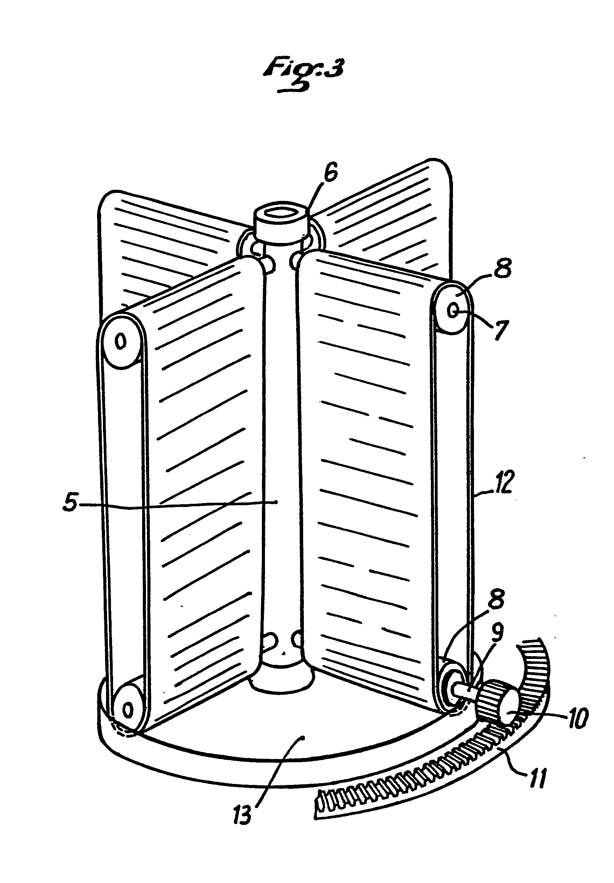

Entre les deux plateaux sont montés huit moulinets représentés plus en détail à la figure 3. Un moulinet comporte un axe vertical 5 monté à rotation entre deux paliers 6. Des parties supérieure et inférieure de l'axe 3 partent des axes radiaux 7 uniformément répartis et espacés de 90° dans le mode de réalisation représenté et sur ces axes sont montés à rotation libre des cylindres 8. Le cylindre 8 inférieur est solidarisé avec un bout d'arbre coaxial 9 qui porte un pignon 10 engrenant avec une couronne dentée périphérique 11 de façon que, lors de la rotation du moulinet autour de l'axe 5, une bande sans fin 12 tendue entre les deux cylindres 8 soit amenée à défiler. Cette bande 12 est une bande imprégnable et elle peut être réalisée en feutre, en tissu à poils ou être garnie d'une multitude de petites poches formant des augets dirigés vers le haut sur le brin ascendant de la bande. La partie inférieure de chaque rouleau 8 et la partie de la bande 12 enroulée autour de celui-ci se trouvent dans un bac circulaire 13 qui est alimenté en liquide mouillant, neutralisant, antiseptique ou autre, susceptible de capter et neutraliser les poussières. Ce liquide, remonté par la bande 12 au cours de l'entraînement de cette dernière, imbibe toute sa surface et la bande est lavée au cours de son passage dans le bain remplissant le bac 13.

Il est bien certain que les bandes 12 pourraient également passer autour de cylindres 8 montés fixes parallèlement ou obliquement dans le circuit de circulation du flux gazeux, les cylindres 8 étant entraînés par une transmission commune quelconque connue. Les moulinets, respectivement leurs axes 5, sont interconnectés par une transmission mécanique non représentée de façon qu'ils tournent en synchronisme selon les flèches R.

A l'extérieur des moulinets sont montées des aubes directrices fixes 14-15 qui orientent les filets d'air pour les dévier tangentiellement sur les ailes constituées par les surfaces des bandes 12 des moulinets. Comme on le voit d'après les flèches en tiretés, les moulinets situés au vent V sont moteurs et ils entraînent les moulinets sous le vent qui aspirent les filets d'air qui tourbillonnent à proximité de la partie arrière du carter.

Entre les aubes 14-15 et entre les aubes 15 et les parois latérales concaves 4 des piliers 3 sont disposées des surfaces de captage 16 qui peuvent être des toiles dont la surface présente des aspérités, par exemple des poils, et elles sont arrosées en liquide mouillant, neutralisant ou antiseptique par des buses 17 alimentées en liquide depuis une pompe non représentée par une canalisation 18 placée sous le plateau supérieur 1.

En aval des moulinets, l'air circule dans un labyrinthe formé par des parois concentriques 19 qui peuvent avoir une constitution analogue aux surfaces de captage 16 et qui sont arrosées en liquide par des buses 20. L'air sort du labyrinthe par des ouïes 21 dans une cheminée centrale.

Dans l'axe de la cheminée centrale est monté à rotation, par des paliers 22, un arbre tubulaire 23 qui porte des pales d'hélice 24. A l'extrémité inférieure de l'arbre 23 est calé le rotor d'une pompe immergée 25 qui aspire dans une réserve de liquide 26 pour refouler le liquide dans l'arbre tubulaire 23. Le liquide est projeté par des orifices 27 pour former dans la cheminée centrale des rideaux liquides qui sont traversés par l'air aspiré sur la paroi périphérique et sur celui propulsé longitudinalement dans la cheminée par la vitesse de chute de l'engin. Le liquide qui lave la paroi interne de la cheminée coule le long de celle-ci et est collecté dans une gouttière 28 et il est renvoyé, ensemble avec le liquide d'arrosage des surfaces 19 collecté dans la même gouttière et celui d'arrosage des surfaces 16 collecté dans un bac 29, par des canalisations 30, à la réserve de la pompe qui alimente les canalisations 18.

A sa partie supérieure, la cheminée centrale se prolonge par un diffuseur 31. L'air est admis à sa base par un convergent délimité par une enceinte centrale contenant la réserve de liquide 26 alimentant la pompe 25, enceinte dont la paroi 32 a une forme en bulbe aérodynamique, et par une paroi périphérique en entonnoir 33.

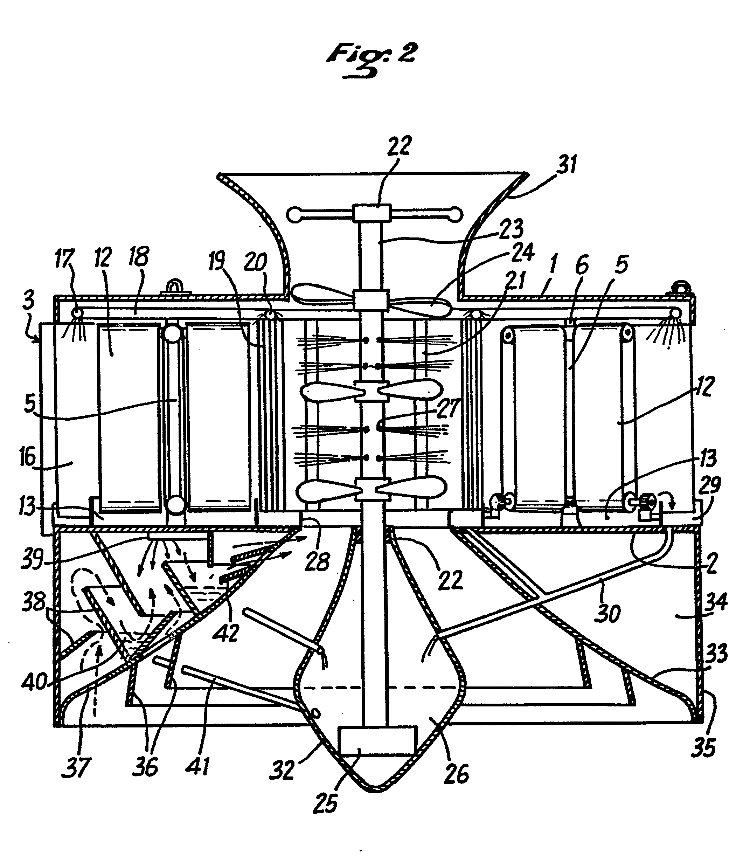

La chambre 34 entre la paroi et la jupe périphérique 35 qui prolonge vers le bas la surface du caisson, est de préférence utilisée pour capter les poussières d'une partie du flux d'air s'engouffrant dans l'entonnoir 33. Le système de captage, qui est de révolution autour de l'axe de l'engin, n'a été représenté, pour la simplification des dessins, que sur la partie de gauche de la figure 2.

Des jupes internes 36 dévient une partie du flux d'air vers des ouies 37 qui donnent accès dans la chambre 34. Dans cette chambre sont disposées des parois tronconiques en chicane 38 dont les surfaces sont arrosées par des buses 39, le liquide s'amassant en 40 dans les rigoles formées par les parois 38 d'où il est ramené par des canalisations 41 dans la réserve 26. L'air ayant traversé le circuit en chicane dans la chambre 34 est ensuite réintroduit, après avoir été ainsi purifié, dans le courant d'air central qui entraîne, par les hélices 24, le rotor de la pompe 25. L'air qui a passé directement dans la partie centrale est purifié par lavage lors de la traversée des rideaux liquides projetés depuis les ajutages 27.

## Revendications

1. Un capteur de poussières comportant un circuit de circulation pour le flux d'air à débarrasser des poussières et particules,
caractérisé en ce que le flux d'air circule au contact d'au moins une paroi fixe (16-19) ou mobile (12) imprégnée par capillarité ou trempage avec un liquide mouillant et de préférence neutralisant ou bactéricide.

2. Un capteur de poussières selon la revendication 1,
caractérisé en ce que la paroi mobile est sous forme d'une bande sans fin verticale (12) dont la boucle inférieure plonge dans la masse de liquide (13) pour assurer le lavage de la bande et l'élimination des particules et substances déposées sur sa surface.

3. Un capteur de poussières selon la revendication 1,
caractérisé en ce que le flux d'air à débarrasser des poussières et particules circule en étant soumis à au moins un et de préférence plusieurs changements de direction assurant des accélérations centrifuges de manière à précipiter les éléments les plus denses du flux vers la paroi (19-38) imprégnée de liquide mouillant.

4. Un capteur de poussières selon la revendication 3,
caractérisé un ce que les accélérations centrifuges sont assurées par des chicanes (19-38), canal en spirale ou hélicoïdal, par un cyclone et/ou par des bombements de la paroi venant en saillie dans la section du canal de circulation du flux.

5. Un capteur de poussières selon l'une quelconque des revendications 1 à 4,
caractérisé en ce que la paroi présente un ensemble d'éléments en relief tels que notamment des poils ou tétons en quinconce accroissant la surface de contact ou des reliefs tels que des nervures, gorges et poches superficielles assurant un freinage de la couche laminaire au contact et des turbulences et zones de calme favorisant la venue des poussières et corpuscules au contact de la face mouillée de la paroi.

6. Un capteur de poussières selon l'une quelconque des revendications 1 à 5 ci-dessus,
caractérisé en ce qu'il est constitué par un caisson (1,2,3) en métal léger ou matière plastique comportant au moins un orifice d'entrée d'air, un dispositif (5-12, 24) d'aspiration et de propulsion de l'air, un circuit (14,15,4-19-32,33) de canalisation du flux d'air et des dispositifs (16-19-27) de captage des poussières disposés le long de ce circuit de canalisation et consitués par des parois fixes ou mobiles imprégnées par capillarité ou trempage avec un liquide mouillant.

7. Un capteur de poussières selon l'une quelconque des revendications 1 à 6 ci-dessus,
caractérisé en ce que le dispositif capteur de poussières ou au moins ses ouïes d'admission de l'air dans la gaine conduisant au circuit du capteur, sont auto-orientables dans le lit du vent soit par action du vent sur une dérive faisant tourner le dispositif autour d'un pivot ou de son moyen de suspension, soit par contrôle de l'alimentation d'un moteur d'orientation par un dispositif détecteur de la direction du vent ou analogue.

8. Un capteur de poussières selon l'une quelconque des revendications 1 à 7,
caractérisé en ce que le dispositif pour le captage des poussières en altitude est suspendu à un ballon du type libre, dirigeable ou captif.

9. Un capteur de poussières selon l'une quelconque des revendications 1 à 7,
caractérisé en ce que le dispositif est largable en altitude par un aéronef ou une fusée pour descendre à travers le nuage à explorer en étant freiné par un parachute.

10. Un capteur de poussières selon la revendication 9,
caractérisé en ce que la vitesse de chute est utilisée comme source génératrice de l'énergie éolienne, le dispositif capteur aspirant l'air à analyser par aspiration indirecte à sa périphérie et/ou par refoulement direct à travers dans entrées (32-34) d'air prévues sur sa surface inférieure.

11. Un capteur de poussières selon l'une quelconque des revendications 1 à 7,
caractérisé en ce que le dispositif est propulsé à travers le nuage à analyser par ballon dirigeable, aéronef ou fusée, l'air étant aspiré et l'énergie éolienne fournie par la vitesse relative du porteur-propulseur par rapport à l'atmosphère traversée.

# Fig:1

EP 0 325 868 A1

Fig. 2

# Fig.3

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | US-A-2 396 526 (A.E. NILSSON)<br>* En entier * | 1 | F 03 D 9/00<br>B 01 D 50/00<br>B 01 D 45/00 |
| A | US-A-2 150 027 (U.V. D'ANNUNZIO)<br>* Page 3, lignes 49-60; figure 5 * | 2 | |
| A | US-A-3 802 167 (B.N. TURMAN)<br>* En entier * | 3,4,6,8 ,9 | |
| A | US-A-3 812 657 (L.K. LAMPINEN)<br>* En entier * | 3 | |
| A | GB-A-1 408 418 (J. THORDARSON)<br>* Page 3, ligne 98 - page 4, ligne 46; figure 1 * | 5,1 | |

DOMAINES TECHNIQUES
RECHERCHES (Int. Cl.4)

B 01 D 50/00
B 01 D 45/00
F 03 D 9/00

Le présent rapport a été établi pour toutes les revendications

| Lieu de la recherche | Date d'achèvement de la recherche | Examinateur |
|---|---|---|
| LA HAYE | 31-08-1988 | POLESAK, H.F. |